# FASCICULE DE BREVET EUROPEEN

(11) **EP 2 917 068 B1**
(45) Date de publication et mention de la délivrance du brevet: **03.08.2016**
(21) Numéro de dépôt: 13805434.1
(22) Date de dépôt: 17.10.2013
(51) Int. Cl.: B60N 2/015, B60N 2/427

(54) **DISPOSITIF DE RENFORT D'UN SOUBASSEMENT D'UN VEHICULE**
VORRICHTUNG ZUM VERSTÄRKEN EINES UNTERGESTELLS EINES FAHRZEUGS
DEVICE FOR REINFORCING AN UNDERFRAME OF A VEHICLE

(30) Priorité: 06.11.2012 FR 1260524
(43) Date de publication de la demande: 16.09.2015
(73) Titulaire: Peugeot Citroën Automobiles SA, 78140 Vélizy Villacoublay (FR)
(72) Inventeur: BENANE, Said, F-94550 Chevilly Larue (FR); DESPLANCHES, Patrice, F-78100 Saint Germain en Laye (FR)
(74) Mandataire: Fosse, Danièle
(86) Numéro de dépôt international: PCT/FR2013/052486
(87) Numéro de publication internationale: WO 2014/072604

(56) Documents cités:
- DE-A1- 19 756 252
- GB-A- 792 292
- US-A1- 2005 017 544

## Description

L'invention concerne un dispositif de renfort d'un soubassement d'un véhicule pour limiter la déformation du soubassement en cas de choc du véhicule.

On connait un type de véhicule qui est équipé d'un soubassement comportant un plancher en tôle renforcé par une traverse transversale métallique.

La traverse s'étend globalement sur toute la largeur du soubassement et elle présente une section longitudinale en U, par exemple.

De plus, le véhicule comporte une assise, comme une banquette arrière, qui comporte généralement trois sièges dont chacun est équipé d'une ceinture de sécurité pour retenir le passager attaché sur le siège associé en cas de choc du véhicule.

L'assise est équipée d'une ossature qui est fixée sur le soubassement, de préférence sur la traverse.

En cas de choc frontal du véhicule, l'ensemble constitué par les passagers et l'assise est entraîné vers l'avant du véhicule, l'assise exerçant un effort d'arrachement sur le soubassement sur lequel elle est fixée.

Cet effort d'arrachement, qui comporte généralement une composante longitudinale et une composante verticale perpendiculaires à la traverse, risque de déformer, voire d'arracher, la traverse et le plancher du soubassement. Un tel soubassement est notamment décrit dans DE 197 56 252.

Pour pallier notamment cet inconvénient, l'invention propose un dispositif de renfort du soubassement qui permet de limiter la déformation du soubassement en cas de choc à l'avant du véhicule.

Dans ce but, l'invention propose un dispositif de renfort d'un soubassement d'un véhicule, le soubassement comportant au moins un plancher renforcé par une traverse transversale qui est reliée à une assise pour s'opposer à un effort d'arrachement de l'assise en cas de choc du véhicule, ledit effort étant globalement perpendiculaire à la traverse, caractérisé en ce que le dispositif comporte :
- une chape comportant une partie d'ancrage adaptée pour être fixée sur le soubassement et une partie de retenue qui est adaptée pour être reliée sur l'assise pour transmettre l'effort d'arrachement au soubassement, et
- une barre de retenue qui comporte au moins un premier bras qui s'étend globalement transversalement depuis un tronçon distal adapté pour être fixé sur le soubassement, jusqu'à un tronçon proximal monté sur la partie de retenue de la chape, l'ensemble constitué par la chape et la barre de retenue étant conçu pour limiter la déformation du soubassement en cas de choc du véhicule.

Ainsi, la barre de retenue permet de s'opposer à l'arrachement de la chape de façon à limiter la déformation du soubassement.

Selon une autre caractéristique, la partie de retenue de la chape comporte un premier flan qui s'étend perpendiculairement au premier bras et qui coopère avec le tronçon proximal du premier bras de façon à s'opposer à l'arrachement de la chape.

De plus, le premier flan est conçu pour être déformé contre le tronçon proximal du premier bras pour limiter la déformation du soubassement en cas de choc du véhicule.

Selon cette caractéristique, le flan se déforme et absorbe une partie de l'énergie de l'effort d'arrachement transmise à la chape par l'assise.

En outre, la partie d'ancrage de la chape comporte une première languette qui relie la chape sur la traverse et une seconde languette qui relie la chape sur le plancher, la première languette et la seconde languette étant raccordées entre elles par une bande intermédiaire de section longitudinale en U appartenant à la partie de retenue de la chape.

Cette caractéristique permet notamment de répartir l'effort d'arrachement de l'assise sur le soubassement.

De plus, le premier flan de la chape est interposé longitudinalement entre la première languette et la seconde languette de la chape.

Selon un autre aspect, la traverse présente une section longitudinale en U formant un creux dans lequel un pontet de renfort est fixé, le pontet reliant la première languette de la chape et la traverse entre elles.

De plus, la chape est réalisée venue de matière en une seule pièce.

Aussi, le dispositif comporte au moins une première patte de fixation qui s'étend longitudinalement et qui retient le tronçon distal du premier bras sur le soubassement.

Complémentairement, le dispositif comporte un second bras qui s'étend globalement transversalement dans le prolongement dudit premier bras, depuis un tronçon distal fixé sur le soubassement, jusqu'à un tronçon proximal fixé sur la partie de retenue de la chape, et la partie de retenue de la chape comporte un second flan qui s'étend longitudinalement et qui coopère avec le tronçon proximal du second bras de façon à s'opposer à l'arrachement de la chape.

L'invention concerne aussi un soubassement d'un véhicule équipé d'un dispositif de renfort selon l'une quelconque des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique, qui illustre un dispositif de renfort d'un soubassement d'un véhicule comportant une chape montée sur une traverse et une barre de retenue de la chape, selon l'invention ;
- la figure 2 est une vue en perspective, qui illustre l'ossature d'une assise arrière reliée à la chape du dispositif de renfort du soubassement selon l'invention, avant un choc à l'avant du véhicule ;
- la figure 3 est une vue en perspective, qui illustre l'ossature d'une assise arrière reliée à la chape du dispositif de renfort du soubassement selon l'invention, après un choc à l'avant du véhicule ;
- la figure 4 est une vue de détail en perspective, qui illustre la chape fixée sur le soubassement et reliée à la barre de retenue.

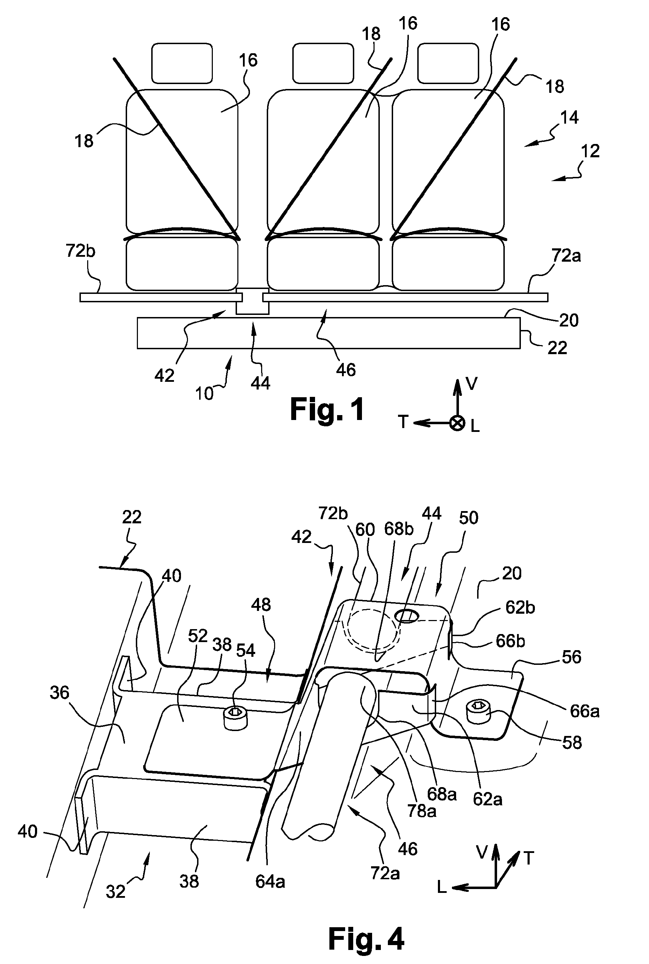

Dans la description et les revendications, on utilisera à titre non limitatif les expressions « bas » et « haut » en référence à la partie supérieure et à la partie inférieure respectivement des figures 1 à 4.

De plus, pour clarifier la description et les revendications, on adoptera à titre non limitatif la terminologie longitudinal, vertical et transversal en référence au trièdre L, V, T indiqué aux figures, ainsi que les expressions « avant » et « arrière » en référence à la partie avant et à la partie arrière du véhicule.

On a représenté à la figure 1 un soubassement 10 d'un véhicule 12 automobile sur lequel une assise 14 du type banquette est fixée.

L'assise 14 comporte trois sièges 16 qui sont agencés à l'arrière du véhicule 12 et qui sont chacun équipés d'une ceinture de sécurité 18.

Le soubassement 10 comporte un plancher 20 en tôle qui s'étend dans un plan longitudinal et transversal, et qui est renforcé par une traverse 22 transversale métallique.

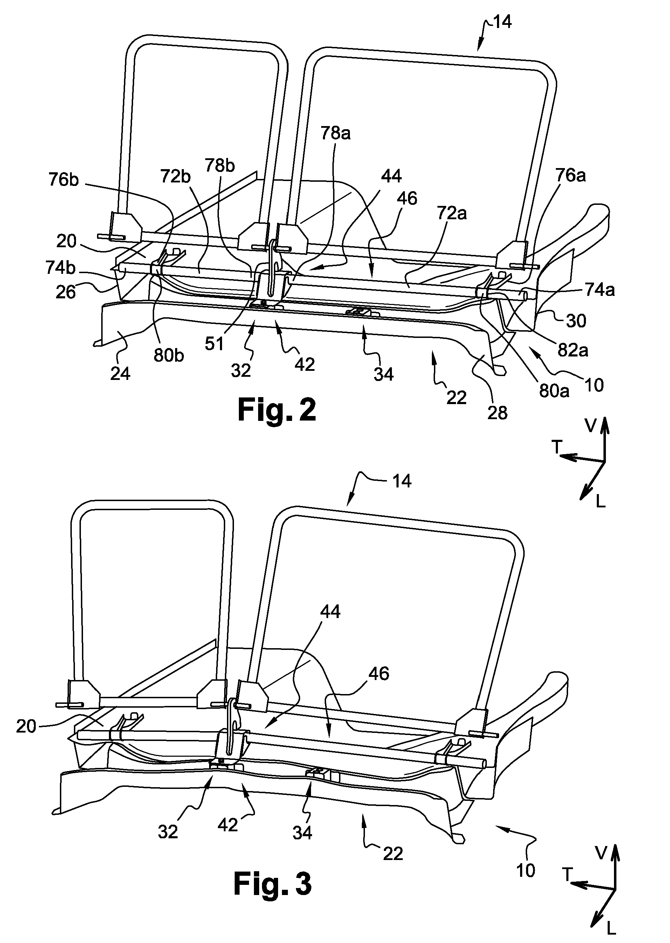

Comme on peut le voir à la figure 2, la traverse 22 s'étend depuis un premier tronçon d'extrémité libre 24 qui est fixé sur un premier longeron 26 longitudinal de la structure du véhicule 12, jusqu'à un second tronçon d'extrémité libre 28 qui est fixé sur un second longeron 30 longitudinal.

La traverse 22 présente une section longitudinale en U formant un creux ouvert vers le haut dans lequel un premier pontet 32 et un second pontet 34 de renfort sont fixés.

Le premier pontet 32, illustré à la figure 4, présente une section transversale en U ouvert vers le bas, et est constitué d'une plaque supérieure 36 parallèle au plancher 20 et de deux plaques latérales 38 longitudinales qui sont perpendiculaires à la plaque supérieure 36.

De plus, le premier pontet 32 comporte deux extrémités libres longitudinales qui sont chacune munies de deux languettes 40 (dont seulement deux sont visibles à la figure 4) plaquées et soudées sur les deux parois internes transversales de la traverse 22.

De même, le second pontet 34 étant identique au premier pontet 32, il n'est pas décrit plus en détail par la suite.

Selon un autre aspect, le véhicule 12 est équipé d'un dispositif 42 de renfort du soubassement 10 qui est conçu pour limiter la déformation du soubassement 10 en s'opposant à un effort d'arrachement de l'assise 14 en cas de choc frontal du véhicule 12, l'effort d'arrachement étant globalement perpendiculaire à la traverse 22.

Dans ce but, le dispositif 42 comporte une chape 44 qui est fixée sur le soubassement 10, et une barre de retenue 46 qui est conçue pour limiter la déformation du soubassement 10 en s'opposant à l'arrachement de la chape 44.

Comme on peut le voir à la figure 4, la chape 44 comporte une partie d'ancrage 48 inférieure fixée sur le soubassement 10, et une partie de retenue 50 supérieure qui est solidaire de la partie d'ancrage 48.

La partie d'ancrage 48 de la chape 44 comporte une première languette 52 avant qui est fixée sur la plaque supérieure 36 du premier pontet 32 par une vis 54 pour relier la chape 44 sur la traverse 22.

De même, la partie d'ancrage 48 de la chape 44 comporte une seconde languette 56 arrière qui est plaquée et fixée sur le plancher 20 par une vis 58, pour relier la chape 44 sur le plancher 20.

Selon la figure 4, la chape 44 comporte une bande intermédiaire 60 qui est interposée longitudinalement entre la première languette 52 et la seconde languette 56.

La bande intermédiaire 60 présente une section longitudinale en U ouverte vers le bas, qui raccorde la première languette 52 et la seconde languette 56 entre elles et qui renforce structurellement la chape 44.

En outre, comme on peut le voir à la figure 2, l'ossature de l'assise 14 est fixée sur la chape 44 par l'intermédiaire d'une platine 51 globalement verticale formant moyen de liaison, qui est vissée sur la bande intermédiaire 60 de la chape 44.

De plus, la partie de retenue 50 de la chape 44 forme un premier flan 62a et un second flan 62b qui sont agencés de part et d'autre d'un plan de symétrie médian (non représenté) longitudinal et vertical de conception de la chape 44.

Le premier flan 62a est une plaque verticale qui s'étend transversalement vers l'arrière depuis un premier bord d'attache 64a qui est relié sur la bande intermédiaire 60 de la chape 44, jusqu'à une première extrémité libre 66a.

Comme le montre la figure 4, le premier flan 62a de la chape 44 est interposé longitudinalement entre la première languette 52 avant et la seconde languette 56 arrière.

De plus, le premier flan 62a délimite une première encoche 68a en U ouverte vers le haut et formant logement.

Par symétrie, le second flan 62b est une plaque verticale qui s'étend transversalement vers l'arrière depuis un second bord d'attache (non représenté) qui est relié sur la bande intermédiaire 60 de la chape 44, jusqu'à une seconde extrémité libre 66b.

De plus, le second flan 62b délimite une seconde encoche 68b en U ouverte vers le haut et formant logement.

Avantageusement, la chape 44 est réalisée venue de matière en une seule pièce, ici en métal, le premier flan 62a et le second flan 62a étant réalisés par pliage, par exemple.

Complémentairement, selon la figure 2, la barre de retenue 46 comporte un premier bras 72a et un second bras 72b qui s'étendent chacun transversalement.

Le premier bras 72a s'étend depuis un tronçon distal 74a fixé sur le soubassement 10 par l'intermédiaire d'une première patte 76a longitudinale de fixation, jusqu'à un tronçon proximal 78a.

La première patte 76a comporte une tête avant 80a qui délimite un orifice 82a circulaire dans lequel est logé et soudé le tronçon distal 74a du premier bras 72a.

De plus, la première patte 76a est fixée sur le soubassement 10, au voisinage du second longeron 30, par vissage au moyen de deux vis (non représentées).

Selon la figure 4, le tronçon proximal 78a du premier bras 72a est logé et soudé dans la première encoche 68a en U du premier flan 62a, de sorte que le tronçon proximal 78a est apte à s'opposer au déplacement de la chape 44 pour limiter la déformation de la traverse 22.

Le second bras 72b s'étend transversalement dans le prolongement du premier bras 72a, le second bras 72b étant identique au premier bras 72a décrit précédemment.

Plus particulièrement, le second bras 72b s'étend depuis un tronçon distal 74b fixé sur le soubassement 10 par l'intermédiaire d'une seconde patte 76b longitudinale de fixation, jusqu'à un tronçon proximal 78b.

La seconde patte 76b comporte une tête avant 80b qui délimite un orifice (non représenté) circulaire dans lequel est logé et soudé le tronçon proximal 78b du second bras 72b.

De plus, la seconde patte 76b est fixée sur le soubassement, au voisinage du second longeron 30, par vissage au moyen de deux vis (non représentée).

Le tronçon proximal 78b du second bras 72b est logé et soudé dans la seconde encoche 68b en U du second flan 62b, de sorte que le tronçon proximal 78b est apte à s'opposer au déplacement de la chape 44 pour limiter la déformation de la traverse 22.

Le dispositif 42 de renfort du soubassement 10 est conçu pour limiter la déformation du soubassement 10 en cas de choc du véhicule 12, notamment en cas de choc frontal, comme le montre la figure 3.

En effet, en cas de choc, l'assise 14 transmet un effort d'arrachement au soubassement 10 par l'intermédiaire de la platine 51 et de la chape 44.

L'effort d'arrachement comporte une composante longitudinale et une composante verticale perpendiculaires à la traverse 22, risquant de déformer, voire d'arracher, la traverse 22 et le plancher 20 du soubassement 10.

Dans le but de limiter la déformation de la traverse 22 et du plancher 20, la chape 44 relie mécaniquement la traverse 22 et le plancher 20 entre eux, notamment pour répartir l'effort d'arrachement de l'assise 14 sur le soubassement 10.

De plus, le tronçon proximal 78a, 78b de chaque bras 72a, 72b s'oppose au déplacement de la chape 44, notamment au déplacement vertical vers le haut, en coopérant avec le premier flan 62a et le second flan 62b respectivement.

En effet, en cas de choc, le tronçon proximal 78a, 78b du premier bras 72a et du second bras 72b respectivement s'opposent à l'arrachement de la chape 44, de sorte que le premier flan 62a et le second flan 62b se déforment contre le premier bras 72a et le second bras 72b, absorbant une partie de l'énergie du choc et limitant ainsi la déformation du soubassement.

Ainsi, la chape 44 agit sensiblement à la manière d'un fusible ou d'une pièce intermédiaire qui se déforme au bénéfice du soubassement 10.

A titre non limitatif, la barre de retenue 46 peut être réalisée en un seul élément constitué du premier bras 72a et du second bras 72b.

## Revendications

1. Dispositif (42) de renfort d'un soubassement (10) d'un véhicule (12), le soubassement (10) comportant au moins un plancher (20) renforcé par une traverse (22) transversale qui est reliée à une assise (14) pour s'opposer à un effort d'arrachement de l'assise (14) en cas de choc du véhicule (12), ledit effort étant globalement perpendiculaire à la traverse (22), **caractérisé en ce que** le dispositif (42) comporte :
- une chape (44) comportant une partie d'ancrage (48) adaptée pour être fixée sur le soubassement (10) et une partie de retenue (50) qui est adaptée pour être reliée sur l'assise (14) pour transmettre l'effort d'arrachement au soubassement (10), et
- une barre de retenue (46) qui comporte au moins un premier bras (72a) qui s'étend globalement transversalement depuis un tronçon distal (74a) adapté pour être fixé sur le soubassement (10), jusqu'à un tronçon proximal (78a) monté sur la partie de retenue (50) de la chape (44), l'ensemble constitué par la chape (44) et la barre de retenue (46) étant conçu pour limiter la déformation du soubassement (10) en cas de choc du véhicule.

2. Dispositif (42) de renfort d'un soubassement (10) d'un véhicule (12) selon la revendication 1, **caractérisé en ce que** la partie de retenue (50) de la chape (44) comporte un premier flan (62a) qui s'étend perpendiculairement au premier bras (72a) et qui coopère avec le tronçon proximal (78a) du premier bras de façon à s'opposer à l'arrachement de la chape (44).

3. Dispositif (42) de renfort d'un soubassement (10) d'un véhicule (12) selon la revendication 2, **caractérisé en ce que** le premier flan (62a) est conçu pour être déformé contre le tronçon proximal (78a) du premier bras (72a) pour limiter la déformation du soubassement (10) en cas de choc du véhicule (12).

4. Dispositif (42) de renfort d'un soubassement (10) d'un véhicule (12) selon l'une quelconque des revendications précédentes, **caractérisé en ce que** la partie d'ancrage (48) de la chape (44) comporte une première languette (52) qui relie la chape (44) sur la traverse (20) et une seconde languette (56) qui relie la chape (44) sur le plancher (20), la première languette (52) et la seconde languette (56) étant raccordées entre elles par une bande intermédiaire (60) de section longitudinale en U appartenant à la partie de retenue (50) de la chape (44).

5. Dispositif (42) de renfort d'un soubassement (10) d'un véhicule (12) selon les revendications 4 et 2, **caractérisé en ce que** le premier flan (62a) de la chape (44) est interposé longitudinalement entre la première languette (52) et la seconde languette (56) de la chape (44).

6. Dispositif (42) de renfort d'un soubassement (10) d'un véhicule (12) selon la revendication 4, **caractérisé en ce que** la traverse (20) présente une section longitudinale en U formant un creux dans lequel un pontet (32) de renfort est fixé, le pontet (32) reliant la première languette (52) de la chape (44) et la traverse (20) entre elles.

7. Dispositif (42) de renfort d'un soubassement (10) d'un véhicule (12) selon l'une quelconque des revendications précédentes, **caractérisé en ce que** la chape (44) est réalisée venue de matière en une seule pièce.

8. Dispositif (42) de renfort d'un soubassement (10) d'un véhicule (12) selon l'une quelconque des revendications précédentes, **caractérisé en ce qu'**il comporte au moins une première patte de fixation (76a) qui s'étend longitudinalement et qui retient le tronçon distal (74a) du premier bras (72a) sur le soubassement (10).

9. Dispositif (42) de renfort d'un soubassement (10) d'un véhicule (12) selon l'une quelconque des revendications précédentes, **caractérisé en ce que** le dispositif comporte un second bras (72b) qui s'étend globalement transversalement dans le prolongement dudit premier bras (72a), depuis un tronçon distal (74b) fixé sur le soubassement (10), jusqu'à un tronçon proximal (78b) fixé sur la partie de retenue (48) de la chape (44), et **en ce que** la partie de retenue (48) de la chape (44) comporte un second flan (62a) qui s'étend longitudinalement et qui coopère avec le tronçon proximal (78b) du second bras (72b) de façon à s'opposer à l'arrachement de la chape (44).

10. Soubassement (10) d'un véhicule (12) équipé d'un dispositif (42) de renfort selon l'une quelconque des revendications précédentes.

## Patentansprüche

1. Verstärkungsvorrichtung (42) für einen Unterboden (10) eines Fahrzeugs (12), wobei der Unterboden (10) zumindest einen durch einen quer verlaufenden Querträger (22) verstärkten Fußraumbereich (20) umfasst, der mit einer Sitzfläche (14) verbunden ist, um sich einer Ausreißkraft der Sitzfläche (14) im Falle eines Aufpralls des Fahrzeugs (12) zu widersetzen, wobei die Kraft im Allgemeinen senkrecht zum Querträger (22) verläuft, **dadurch gekennzeichnet, dass** die Vorrichtung (42) folgendes umfasst:
- einen Halter (44), einen Verankerungsabschnitt (48) umfassend, der ausgeführt ist, um auf dem Unterboden (10) und einem Rückhalteabschnitt (50) befestigt zu werden, der ausgeführt ist, um mit der Sitzfläche (14) verbunden zu werden, um die Ausreißkraft auf den Unterboden (10) zu übertragen, und
- eine Rückhaltestange (46), die zumindest einen ersten Arm (72a) umfasst, der sich im Allgemeinen in Querrichtung aus einem distalen Abschnitt (74a) heraus, der ausgeführt ist, um auf dem Unterboden (10) befestigt zu werden, bis zu einem proximalen Abschnitt (78a) erstreckt, der auf dem Rückhalteabschnitt (50) des Halters (44) montiert ist, wobei die aus dem Halter (44) und der Rückhaltestange (46) gebildete Einheit gestaltet ist, um die Verformung des Unterbodens (10) im Falle eines Aufpralls des Fahrzeugs einzuschränken.

2. Verstärkungsvorrichtung (42) für einen Unterboden (10) eines Fahrzeugs (12) nach Anspruch 1, **dadurch gekennzeichnet, dass** der Rückhalteabschnitt (50) des Halters (44) eine erste Platine (62a) umfasst, die sich senkrecht zum ersten Arm (72a) erstreckt und die mit dem proximalen Abschnitt (78a) des ersten Arms zusammenwirkt, um sich dem Ausreißen des Halters (44) zu widersetzen.

3. Verstärkungsvorrichtung (42) für einen Unterboden (10) eines Fahrzeugs (12) nach Anspruch 2, **dadurch gekennzeichnet, dass** die erste Platine (62a) gestaltet ist, um gegen den proximalen Abschnitt (78a) des ersten Arms (72a) zu verformen, um die Verformung des Unterbodens (10) im Falle eines Aufpralls des Fahrzeugs (12) einzuschränken.

4. Verstärkungsvorrichtung (42) für einen Unterboden (10) eines Fahrzeugs (12) nach irgendeinem der vorherigen Ansprüche, **dadurch gekennzeichnet, dass** der Verankerungsabschnitt (48) des Halters (44) eine erste Zunge (52) umfasst, die den Halter (44) mit dem Querträger (20) verbindet, und eine zweite Zunge (56), die den Halter (44) mit dem Fußraumbereich (20) verbindet, wobei die erste Zunge (52) und die zweite Zunge (56) durch ein Zwischenband (60) in einem U-förmigen Längsabschnitt miteinander verbunden sind, das zum Rückhalteabschnitt (50) des Halters (44) gehört.

5. Verstärkungsvorrichtung (42) für einen Unterboden (10) eines Fahrzeugs (12) nach den Ansprüchen 4 und 2, **dadurch gekennzeichnet, dass** die erste Platine (62a) des Halters (44) in Längsrichtung zwischen der ersten Zunge (52) und der zweiten Zunge (56) des Halters (44) eingeschoben ist.

6. Verstärkungsvorrichtung (42) für einen Unterboden (10) eines Fahrzeugs (12) nach Anspruch 4, **dadurch gekennzeichnet, dass** der Querträger (20) einen U-förmigen Längsabschnitt aufweist, der einen Hohlraum bildet, in dem ein verstärkendes Überbrückungselement (32) befestigt ist, wobei das Überbrückungselement (32) die erste Zunge (52) des Halters (44) und den Querträger (20) miteinander verbindet.

7. Verstärkungsvorrichtung (42) für einen Unterboden (10) eines Fahrzeugs (12) nach irgendeinem der vorherigen Ansprüche, **dadurch gekennzeichnet, dass** der Halter (44) in einem Stück ausgeführt ist.

8. Verstärkungsvorrichtung (42) für einen Unterboden (10) eines Fahrzeugs (12) nach irgendeinem der vorherigen Ansprüche, **dadurch gekennzeichnet, dass** sie zumindest eine erste Befestigungslasche (76a) umfasst, die sich in Längsrichtung erstreckt und die den distalen Abschnitt (74a) des ersten Arms (72a) auf dem Unterboden (10) hält.

9. Verstärkungsvorrichtung (42) für einen Unterboden (10) eines Fahrzeugs (12) nach irgendeinem der vorherigen Ansprüche, **dadurch gekennzeichnet, dass** die Vorrichtung einen zweiten Arm (72b) umfasst, der sich im Allgemeinen in Querrichtung in der Verlängerung des besagten ersten Arms (72a) aus einem distalen Abschnitt (74b) heraus, der auf dem Unterboden (10) befestigt ist, bis zu einem proximalen Abschnitt (78b) erstreckt, der auf dem Rückhalteabschnitt (48) des Halters (44) befestigt ist, und dadurch, dass der Rückhalteabschnitt (48) des Halters (44) eine zweite Platine (62a) umfasst, die sich in Längsrichtung erstreckt, und mit dem proximalen Abschnitt (78b) des zweiten Arms (72b) zusammenwirkt, um sich dem Ausreißen des Halters (44) zu widersetzen.

10. Unterboden (10) eines Fahrzeugs (12), der mit einer Verstärkungsvorrichtung (42) nach irgendeinem der vorherigen Ansprüche ausgestattet ist.

## Claims

1. Device (42) for reinforcing an underframe (10) of a vehicle (12), the underframe (10) comprising at least one floor (20) reinforced by a cross member (22) that is connected to a seat (14) to oppose a force pulling away the seat (14) in the event of impact of the vehicle (12), said force being roughly perpendicular to the cross member (22), **characterised in that** the device (42) comprises:
- a clevis (44) comprising an anchoring part (48) suitable for being fixed to the underframe (10) and a retaining part (50) that is suitable for being connected to the seat (14) in order to transmit the pulling-away force to the underframe (10), and
- a retaining bar (46) that comprises at least one first arm (72a) that extends roughly transversely from a distal portion (74a) suitable for being fixed to the underframe (10), as far as a proximal portion (78a) mounted on the retaining part (50) of the clevis (44), the assembly consisting of the clevis (44) and the retaining bar (46) being designed to limit the deformation of the underframe (10) in the event of impact of the vehicle.

2. Device (42) for reinforcing an underframe (10) of a vehicle (12) according to claim 1, **characterised in that** the retaining part (50) of the clevis (44) comprises a first panel (62a) that extends perpendicular to the first arm (72a) and cooperates with the proximal portion (78a) of the first arm so as to oppose the pulling away of the clevis (44).

3. Device (42) for reinforcing an underframe (10) of a vehicle (12) according to claim 2, **characterised in that** the first panel (62a) is designed so as to be deformed against the proximal portion (78a) of the first arm (72a) in order to limit the deformation of the underframe (10) in the event of impact of the vehicle (12).

4. Device (42) for reinforcing an underframe (10) of a vehicle (12) according to any one of the preceding claims, **characterised in that** the anchoring part (48) of the clevis (44) comprises a first tongue (52) that connects the clevis (44) to the cross member (20) and a second tongue (56) that connects the clevis (44) to the floor (20), the first tongue (52) and the second tongue (56) being connected together by an intermediate band (60) with U-shaped longitudinal section belonging to the retaining part (50) of the clevis (44).

5. Device (42) for reinforcing an underframe (10) of a vehicle (12) according to claims 4 and 2, **characterised in that** the first panel (62a) of the clevis (44) is interposed longitudinally between the first tongue (52) and the second tongue (56) of the clevis (44).

6. Device (42) for reinforcing an underframe (10) of a vehicle (12) according to claim 4, **characterised in that** the cross member (20) has a U-shaped longitudinal section forming a hollow in which a reinforcing bridge (32) is fixed, the bridge (32) connecting the first tongue (52) of the clevis (44) and the cross member (20) together.

7. Device (42) for reinforcing an underframe (10) of a vehicle (12) according to any one of the preceding claims, **characterised in that** the clevis (44) is produced in one piece.

8. Device (42) for reinforcing an underframe (10) of a vehicle (12) according to any one of the preceding claims, **characterised in that** it comprises at least one first fixing lug (76a) that extends longitudinally and holds the distal portion (74a) of the first arm (72a) on the underframe (10).

9. Device (42) for reinforcing an underframe (10) of a vehicle (12) according to any one of the preceding claims, **characterised in that** the device comprises a second arm (72b) that extends roughly transversely in line with said first arm (72a), from a distal portion (74b) fixed to the underframe (10), as far as a proximal portion (78b) fixed to the retaining part (48) of the clevis (44), and **in that** the retaining part (48) of the clevis (44) comprises a second panel (62a) that extends longitudinally and cooperates with the proximal portion (78b) of the second arm (72b) so as to oppose the pulling away of the clevis (44).

10. Underframe (10) of a vehicle (12) equipped with a reinforcing device (42) according to any one of the preceding claims.
